# EUROPEAN PATENT APPLICATION

(11) **EP 2 840 352 A1**
(43) Date of publication of application: **25.02.2015**
(21) Application number: 14002894.5
(22) Date of filing: 20.08.2014
(51) Int. Cl.: G01B 9/02

(54) **Interferometric apparatus combined with a non interferometric apparatus, and measuring method**

(30) Priority: 23.08.2013 JP 2013173381
(71) Applicant: Canon Kabushiki Kaisha, Tokyo (JP)
(72) Inventor: Kitamura, Hideaki, Tokyo (JP); Kuramoto, Yoshiyuki, Tokyo (JP)
(74) Representative: WESER & Kollegen

(57) **Abstract**

Provided is a measuring apparatus (100) in which a beam splitter (6), configured to split a first beam emitted from a first source (1) into test light and reference light, and a beam multiplexer (8), configured to multiplex the test light reflected by an object to be tested (13) and the reference light, are separately provided, and in which a beam guiding unit (11) configured to guide a second beam emitted by a second source (2) to the object to be tested is disposed on the optical path of the test light between the beam splitter (6) and the beam multiplexer (8) or between the beam multiplexer (8) and the detector (9).

## Description

### BACKGROUND OF THE INVENTION

### Field of the Invention

The present invention relates to a measuring apparatus that measures an object to be tested using interferometric data and non-interferometric data.

### Description of the Related Art

Conventionally, there has been known an apparatus that measures the shape of an object to be tested based on non-interference information obtained by non-interference measurement and interference information obtained by interference measurement. Japanese Patent Laid-Open No. H11-108625 discloses an apparatus that measures the shape of an object to be tested using interference measurement and non-interference measurement. Information about the height of the object to be tested is acquired from interference information which is obtained by guiding light emitted from a light source to a test surface and a reference surface and by causing interference of two beams. Information about the size of an object to be tested in the horizontal direction is acquired from non-interference information in which no interference fringe is formed because a reference beam guided to the reference surface is shield by a shutter so as not to cause interference of a test beam guided to the test surface with the reference beam. Thus, the shape of the object to be tested can be measured by using information about the height of the object to be tested and information about the size of the object to be tested in the horizontal direction.

In addition, Japanese Patent Laid-Open No. 2009-536326 discloses an apparatus that is provided with a light source for interference measurement for acquiring interference information and a light source for non-interference measurement for acquiring non-interference information. The light source for interference measurement is disposed between a detector and a splitter that splits a beam into test light and reference light. The light source for non-interference measurement is disposed closer to the object to be tested than the splitter for coupling a reference light path with an optical path. Thus, a beam emitted from the light source for acquiring non-interference information is not split into the reference light path by the splitter that splits the beam into test light and reference light, so that non-interference information can be acquired by the detector without shielding the reference beam. Thus, interference measurement and non-interference measurement are switchingly performed at high speed by electrical adjustment such as turning ON or OFF of the light source without performing mechanical adjustment for a shutter or the like.

However, in the apparatus disclosed in Japanese Patent Laid-Open No. H11-108625, a reference beam is shielded by using a mechanical unit such as a shutter upon acquiring non-interference information. Thus, a time for inserting the shutter into an optical path is required, resulting in an increase in the measurement time between measurement of the height of the object to be tested and measurement of the size of the object to be tested in the horizontal direction. In addition, in order to measure the shape of an object to be tested using the apparatus disclosed in Japanese Patent Laid-Open No. 2009-536326, light emitted from a light source for acquiring interference information needs to pass through multiple splitters until the light reaches the detector. In other words, in Japanese Patent Laid-Open No. 2009-536326, a part of the test beam is reflected by a first beam splitter for introducing a beam emitted from a light source for interference measurement, a second beam splitter for splitting and coupling the beam into test light and reference light, and a third beam splitter for introducing a beam emitted from a light source for non-interference measurement. Thus, the amount of light decreases by the number of times that the light transmits through the beam splitters.

Likewise, light emitted from the light source for non-interference measurement needs to pass through the third beam splitter for introducing a beam emitted from the light source for non-interference measurement, the second beam splitter for splitting and coupling the beam upon interference measurement into test light and reference light, and the first beam splitter for introducing a beam emitted from the light source for interference measurement until the light reaches the detector, resulting in a reduction in the amount of light. Thus, the amount of light received by the detector is small for measuring a black object to be tested having a low reflectance or for measuring a rough surface on which a test beam is scattered, resulting in a loss in the amount of light in the optical system.

### SUMMARY OF THE INVENTION

The present invention provides, for example, a measuring apparatus that measures an object to be tested in a short time with a minimal loss in the amount of light in the optical system.

The present invention in its first aspect provides a measuring apparatus as specified in claims 1 to 3. The present invention in its second aspect provides an measuring method as specified in claim 4.

Further features of the present invention will become apparent from the following description of exemplary embodiments with reference to the attached drawings.

### BRIEF DESCRIPTION OF THE DRAWINGS

FIG. 1 is a schematic diagram illustrating a measuring apparatus according to a first embodiment.
FIG. 2 is a schematic diagram illustrating the measuring apparatus according to the first embodiment with the position of a beam guiding unit changed.
FIG. 3 is a schematic diagram illustrating a measuring apparatus according to a second embodiment.
FIG. 4 is a schematic diagram illustrating the conventional measuring apparatus.

### DESCRIPTION OF THE EMBODIMENTS

Hereinafter, preferred embodiments of the present invention will be described with reference to the drawings.

### (First Embodiment)

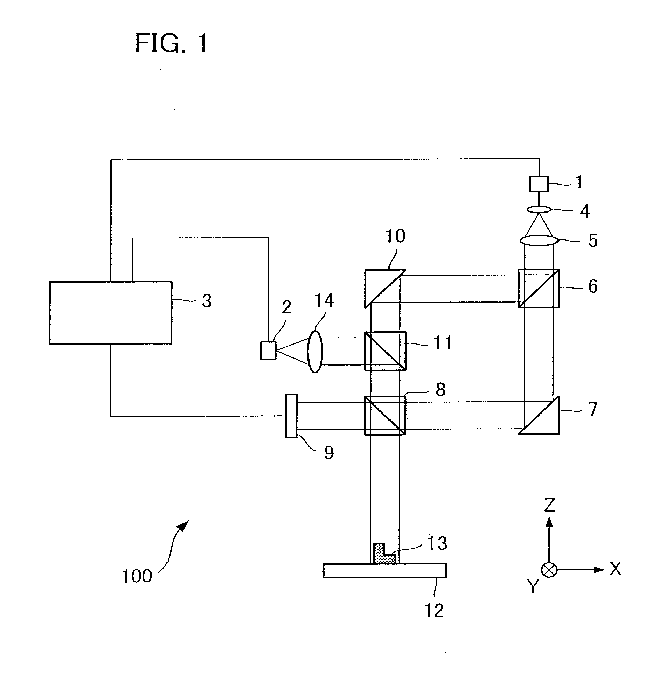

FIG. 1 is a schematic diagram illustrating a measuring apparatus 100 according to the present embodiment. The measuring apparatus 100 includes a light source (first illumination device) 1, a light source (second illumination device) 2, a controlling/analyzing unit 3, a magnifying lens 4, collimator lenses 5 and 14, a beam splitter 6, mirrors 7 and 10, a beam multiplexer 8, a two-dimensional imaging element 9, and a beam guiding unit 11.

The light source 1 is a coherent light source for interference measurement and the light source 2 is an incoherent light source (e.g., white LED) for non-interference measurement. The controlling/analyzing unit 3 can electrically control the lighting of the light source 1 and the light source 2 so as to switch the light source 1 or the light source 2 depending on interference measurement or non-interference measurement. The light source 1 for acquiring interference information in the present embodiment is a coherent wavelength-variable light source.

Firstly, the magnifying lens 4 magnifies a beam (first beam) illuminated (emitted) from the light source 1, and then the collimator lens 5 collimates the beam magnified by the magnifying lens 4 into a collimated beam in order to calculate the Z size (the position in the Z direction) of an object to be tested. The beam splitter 6 splits the beam collimated by the collimator lens 5 into a reference beam and a test beam.

Firstly, the reference beam is reflected by the mirror 7 and then transmits through the beam multiplexer 8 so as to be directed to the two-dimensional imaging element 9 serving as an optical detector. On the other hand, the test beam is reflected by the mirror 10 and then transmits through the beam guiding unit 11 for guiding light emitted from a non-interference light source. The transmitted test beam transmits through the beam multiplexer 8 and then is illuminated onto an object to be tested (test surface) 13 placed on a mounting platform 12. Then, the test beam reflected from the object to be tested 13 returns to the beam multiplexer 8 again, and then is further reflected by the beam multiplexer 8, so that the test beam is directed to the two-dimensional imaging element 9 without transmitting through the beam splitter 6 and the beam guiding unit 11 again. The beam splitter 6 is constituted independently of the beam multiplexer 8 on the optical path of the beam and constitutes a Mach-Zehnder interferometer. While, in the present embodiment, a description is given by taking an example of one two-dimensional imaging element 9, the two-dimensional imaging element 9 may also be used in plural: one used as an X-Y detector and the other one used as a Z detector.

The test beam and the reference beam directed to the two-dimensional imaging element 9 cause an interference, so that interference fringes are formed by the resulting interference light on the two-dimensional imaging element 9. The controlling/analyzing unit 3 causes the two-dimensional imaging element 9 to capture a plurality of images of the interference fringes according to a change in wavelength. The controlling/analyzing unit 3 functions as a processing unit that performs calculation processing for calculating the shape (position (shape information) in the z direction) of the test surface of the object to be tested 13 by performing frequency analysis on the interference fringes of each image from the plurality of images (detection signals) captured by the two-dimensional imaging element 9. The controlling/analyzing unit 3 is constituted by a device including a CPU, a memory, an electrical circuit for performing various types of calculation.

Given that the total amount of scan of the frequency is ΔF, the speed of light is C, and the amount of change in phase of the interference signal is Δϕ, the optical path length difference L between the reference beam and the test beam is represented by the following Formula (1). The Z size is calculated by measuring the change in phase and analyzing it using Formula (1).

### [Formula 1]

Next, the collimator lens 14 collimates the beam emitted from the light source 2 into a collimated beam (second beam) and then the beam collimated by the collimator lens 14 is guided to the beam guiding unit 11 in order to measure the X-Y projected size of the object to be tested 13. Next, the beam guided to the beam guiding unit 11 transmits through the beam multiplexer 8 and then is illuminated onto the object to be tested 13 placed on the mounting platform 12. After illumination, the beam reflected from the object to be tested 13 is further reflected by the beam multiplexer 8, so that the beam is incident on the two-dimensional imaging element 9 serving as a detector without transmitting through the beam splitter 6 and the beam guiding unit 11. The incident beam is captured by the two-dimensional imaging element 9. Next, the controlling/analyzing unit 3 performs edge detection processing or the like for a light intensity image which is the obtained non-interference information so as to measure the X-Y projected size (shape information) of the object to be tested 13.

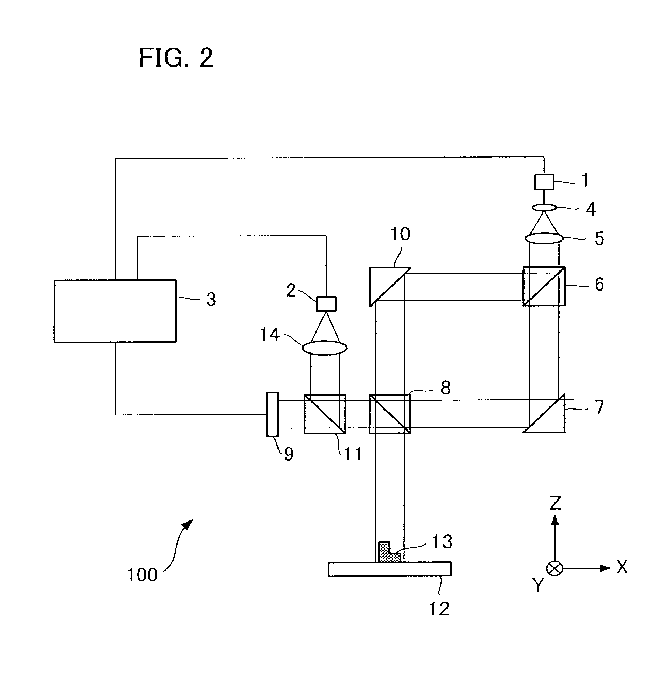

In the present embodiment, the beam guiding unit 11 is disposed on the optical path between the mirror 10 and the beam multiplexer 8. However, it is sufficient that the beam guiding unit 11 is disposed on the optical path of test light for interference measurement between the beam splitter 6 and the beam multiplexer 8. For example, as shown in FIG. 2, the beam guiding unit 11 may also be disposed on the optical path between the beam multiplexer 8 and the two-dimensional imaging element 9. When the light source 1 for interference measurement and the light source 2 for non-interference measurement have different wavelengths, the beam guiding unit 11 may also use a wavelength filter having properties of transmittance and reflectance which are different for each wavelength.

In FIG. 2, the test beam emitted from the light source 1 is reflected by the mirror 10 and then transmits through the beam multiplexer 8 so as to be illuminated onto the object to be tested 13 placed on the mounting platform 12 without transmitting through the beam guiding unit 11 in order to calculate the Z size of the object to be tested 13. Then, the test beam reflected from the object to be tested 13 returns to the beam multiplexer 8 again, is further reflected by the beam multiplexer 8, and then transmits through the beam guiding unit 11 so as to be directed to the two-dimensional imaging element 9. On the other hand, the reference beam emitted from the light source 1 is reflected by the mirror 7, transmits through the beam multiplexer 8, and then transmits through the beam guiding unit 11 so as to be directed to the two-dimensional imaging element 9.

In FIG. 2, the beam emitted from the light source 2 is firstly guided to the beam guiding unit 11 in order to measure the X-Y projected size of the object to be tested 13. The beam guided to the beam guiding unit 11 is reflected by the beam multiplexer 8 and then is illuminated onto the object to be tested 13 placed on the mounting platform 12. Then, the beam reflected from the object to be tested 13 is further reflected by the beam multiplexer 8, so that the beam is directed to the two-dimensional imaging element 9 by transmitting through the beam guiding unit 11.

As described above, the size of the object to be tested in three dimensions along X, Y, and Z axes can be acquired by interference measurement and non-interference measurement. In the present embodiment, interference measurement is performed by a frequency scanning interferometer using a coherent wavelength-variable light source. However, the present invention is not limited thereto. When a low coherent light source such as a white LED is used as the light source 1 for interference measurement and a stage 12 is adapted to be drivable in the Z direction, interference measurement such as white interference measurement or the like may also be performed by using a known measuring unit.

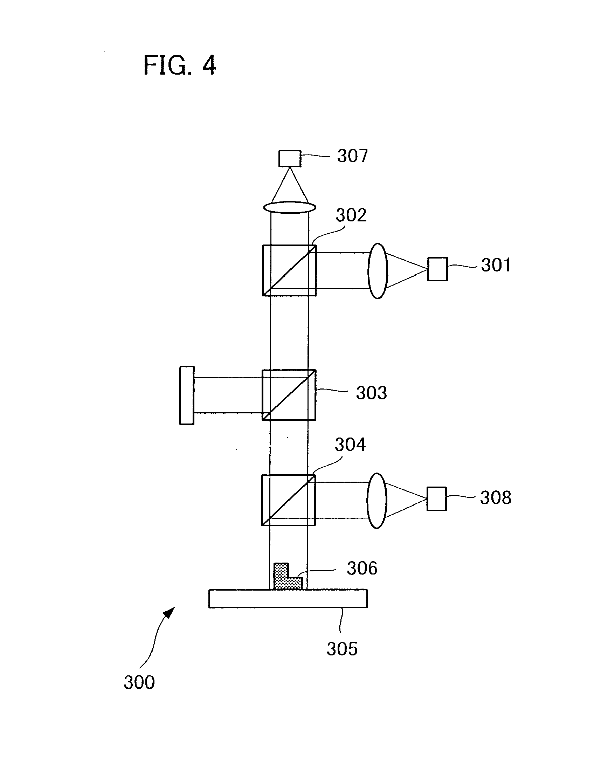

Here, a comparison is made between the present embodiment and the conventional technique. FIG. 4 is a diagram illustrating an exemplary configuration of the conventional Michelson interferometer. Upon measurement of the Z size of an object to be tested 306, the beam emitted from a light source 301 for interference measurement is reflected by a beam splitter 302, is split into reference light and test light by a beam splitter 303, and then passes through a beam splitter 304 for guiding light emitted from a light source 308 for non-interference measurement so as to be incident on the object to be tested 306 placed on the mounting platform 12. Then, the beam reflected from the object to be tested 306 passes through the beam splitter 304, the beam splitter 303, and the beam splitter 302 again so as to be incident on a detector 307. Thus, the test beam emitted from the light source 301 for interference measurement needs to pass through the beam splitters six times in total.

In contrast, in the present embodiment, the test beam emitted from the light source 1 passes through the beam splitter 6, the beam guiding unit 11, and the beam multiplexer 8 so as to be illuminated onto the object to be tested 13. Then, the test beam reflected from the object to be tested 13 is reflected by the beam multiplexer 8 and then is directed to the two-dimensional imaging element 9. Thus, the beam emitted from the light source 1 passes through the beam splitters four times in total without passing through the beam splitter 6 and the beam guiding unit 11 again.

Likewise, in the configuration of a measuring apparatus 300 shown in FIG. 4 upon X-Y measurement, the beam emitted from the light source 308 for non-interference measurement is reflected by the beam splitter 304 and then is illuminated onto the object to be tested 306. Then, the beam reflected from the object to be tested 306 passes through the beam splitter 304, the beam splitter 303, and the beam splitter 302 so as to be incident on the detector 307. Thus, the beam emitted from the light source 308 for non-interference measurement needs to pass through the beam splitters four times in total.

In contrast, in the present embodiment, the beam emitted from the light source 2 is reflected by the beam guiding unit 11 and then passes through the beam multiplexer 8 so as to be illuminated onto the object to be tested 13. Then, the beam reflected from the object to be tested 13 is reflected by the beam multiplexer 8 and then is directed to the two-dimensional imaging element 9. Thus, the beam emitted from the light source 2 passes through the beam splitters three times in total without passing through the beam splitter 6 and the beam guiding unit 11 again.

Also in the measuring apparatus 100 shown in FIG. 2, although the beam emitted from the light source 1 passes through the beam splitters in different sequences, the beam emitted from the light source 1 passes through the beam splitters four times in total and the beam emitted from the light source 2 also passes through the beam splitters four times in total.

Thus, the measuring apparatus 100 can reduce a loss in the amount of light from the light source 1 and the light source 2 by reducing the number of times that a beam passes through beam splitters with a large loss in the amount of light. In addition, in the measuring apparatus 100, the controlling/analyzing unit 3 can electrically control the lighting of the light source 1 and the light source 2 so as to switch the light source 1 or the light source 2 at high speed without insertion/removal of a shutter, so that interference measurement and non-interference measurement can be performed in a short time.

With the above configuration, according to the present embodiment, a measuring apparatus that measures an object to be tested in a short time with a minimal loss in the amount of light in the optical system may be provided.

### (Second Embodiment)

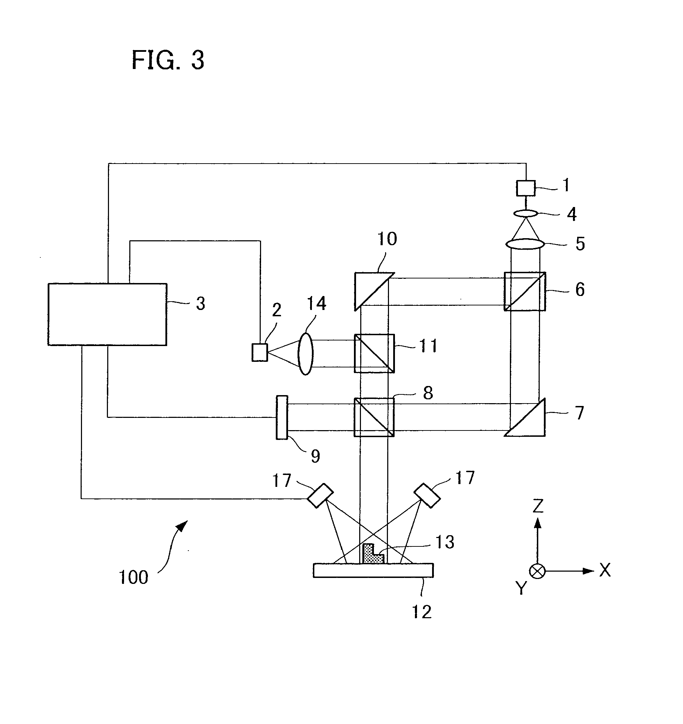

FIG. 3 is a diagram illustrating a configuration of a measuring apparatus 200 according to a second embodiment. The measuring apparatus 200 according to the present embodiment is different from the measuring apparatus 100 according to the first embodiment in that a light source (third illumination device) 17 serving as a light source which performs non-interference measurement by directly irradiating the object to be tested 13 with light is disposed on the object to be tested 13. The light source 17 may be a ring illumination source or the like. In the X-Y measurement by reflective illumination, there is a known technique such as ring illumination, darkfield illumination as a means for realizing high precision measurement. The measuring apparatus 200 of the present embodiment is provided with an illumination source (epi-illumination source) as shown in the first embodiment and a ring illumination source, so that the X-Y measurement can be realized with high precision without depending on the shape of the object to be tested 13. The epi-illumination source and the ring illumination source may also be controlled so as to be switched at high speed in order to select an optimum measuring condition depending on the object to be tested 13.

The light source 17 is one or a plurality of incoherent light sources. For example, a white LED may be used as the light source 17. As in the light source 1 and the light source 2, the controlling/analyzing unit 3 can electrically control the lighting of the light source 17, so that the light source is switchable for each interference measurement and for each non-interference measurement by a different illuminating method. Thus, high-speed switching to non-interference measurement using a ring illumination may also be performed in addition to interference measurement of the first embodiment and non-interference measurement using an epi-illumination source.

A description will be given of the X-Y measurement performed when the light source 17 is used. Firstly, the beam emitted from the light source 17 is reflected from the object to be tested 13, is reflected by the beam multiplexer 8, and then is incident on the two-dimensional imaging element 9 serving as a detector without passing through the beam splitter 6 and the beam guiding unit 11.

The incident beam is captured by the two-dimensional imaging element 9. As in the first embodiment, the controlling/analyzing unit 3 performs edge detection processing or the like for a light intensity image which is the obtained non-interference information so as to measure the X-Y projected size of the object to be tested 13. Next, the Z size of the object to be tested 13 is obtained by performing interference measurement as in the first embodiment. As described above, the size of the object to be tested in three dimensions along X, Y, and Z axes can be acquired by interference measurement and non-interference measurement.

As in the first embodiment, the measuring apparatus 200 can reduce a loss in the amount of light because the number of times that a beam passes through beam splitters is less than that in the conventional technique. Thus, also in the present embodiment, a measuring apparatus that measures the shape of a test surface at high speed with a minimal loss in the amount of light in the optical system, i.e., with a high efficiency of the amount of light in the optical system may be provided. A measuring apparatus that is capable of performing non-interference measurement using an epi-illumination source and high-speed switching to non-interference measurement using a different illuminating method may also be provided.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A measuring apparatus comprising (100):
a first illumination device(1) configured to emit a first beam;
a beam splitter(6) configured to split the first beam into test light and reference light;
a beam multiplexer (8) configured to multiplex the test light reflected by an object to be tested (13) and the reference light;
a second illumination device (2) configured to emit a second beam;
a detector (9) configured to detect the second beam reflected by the object to be tested (13) and interference light between the test light and the reference light;
a processing unit (3) configured to calculate shape information about the object to be tested (13) using a detection signal of light detected by the detector (9); and
a beam guiding unit (11) configured to guide the second beam to the object to be tested (13),
wherein the beam splitter (6) and the beam multiplexer (8) are separately provided, and the beam guiding unit (11) is disposed on an optical path of the test light between the beam splitter (6) and the beam multiplexer (8) or between the beam multiplexer (8) and the detector (9).

2. The measuring apparatus according to claim 1, further comprising:
a third illumination device configured to directly irradiate the object to be tested with light without the intermediary of the beam guiding unit.

3. The measuring apparatus according to claim 1, wherein the beam guiding unit is a wavelength filter disposed on the optical path of the test light between the beam splitter and the beam multiplexer.

4. A measuring method comprising:
a step of emitting a first beam;
a step of splitting the first beam into test light and reference light;
a step of multiplexing the test light reflected by an object to be tested and the reference light;
a step of emitting a second beam;
a step of detecting the second beam reflected by the object to be tested and interference light between the test light and the reference light; and
a step of calculating shape information about the object to be tested using a detected signal of light,
wherein, the second beam is guided to the optical path and thereby to the object to be tested ,on an optical path of the test light after being split and before being multiplexed or on the optical path after the test light and the reference light have been multiplexed and before the interference light has been detected.
